**Europäisches Patentamt**

**European Patent Office**

**Office européen des brevets**

(11) Veröffentlichungsnummer : **0 193 796
B1**

(12) **EUROPÄISCHE PATENTSCHRIFT**

(45) Veröffentlichungstag der Patentschrift :
15.06.88

(51) Int. Cl.⁴ : **B 60 G  3/20**

(21) Anmeldenummer : 86102152.5

(22) Anmeldetag : 19.02.86

(54) Radaufhängung für lenkbare Räder, insbesondere Vorderräder, von Kraftfahrzeugen.

(30) Priorität : 28.02.85 DE 3507141

(43) Veröffentlichungstag der Anmeldung :
10.09.86 Patentblatt 86/37

(45) Bekanntmachung des Hinweises auf die Patenteiteilung : 15.06.88 Patentblatt 88/24

(84) Benannte Vertragsstaaten :
DE FR GB IT SE

(56) Entgegenhaltungen :
EP-A- 0 141 093
DE-A- 2 332 387
DE-A- 2 642 939
DE-A- 3 331 247
DE-A- 3 331 282
DE-U- 7 905 588
US-A- 3 521 900

(73) Patentinhaber : BAYERISCHE MOTOREN WERKE
Aktiengesellschaft
Postfach 40 02 40 Petuelring 130 - AJ-36
D-8000 München 40 (DE)

(72) Erfinder : Matschinsky, Wolfgang
Korbinianplatz 9
D-8000 München 40 (DE)

(74) Vertreter : Dexheimer, Rolf
Bayerische Motoren Werke Aktiengesellschaft Postfach 40 02 40 Petuelring 130 - AJ-31
D-8000 München 40 (DE)

## Beschreibung

Die Erfindung bezieht sich auf eine Radaufhängung für lenkbare Räder, insbesondere Vorderräder, von Kraftfahrzeugen.

Eine Radaufhängung dieser Art ist durch die am 14.03.85 veröffentlichte deutsche Patentanmeldung DE-A-33 31 282 (= EP-A-141093) bekannt. Dieses Dokument fällt unter Artikel 54(3) EPÜ und beschreibt eine Radaufhängung für lenkbare Räder von Kraftfahrzeugen, mit einem das Rad lagernden Radträger, mit dem eine Spurstange sowie ein oberer Querlenker gelenkig verbunden sind, wobei der untere die Tragfeder abstützende Querlenker über ein ecksteifes Drehgelenk mit im wesentlichen längs verlaufender Drehachse mit einem Zwischenstück verbunden ist, an dem seinerseits der Radträger über ein ecksteifes Drehlager mit annähernd vertikaler Achse und vertikaler Verschiebemöglichkeit gelagert ist, wobei ferner der Radträger und das Zwischenstück gelenkig mit einer annähernd vertikalen Zugstange verbunden sind. Bei dieser Radaufhängung ist der untere Querlenker verwindungssteif ausgebildet, während der obere Querlenker ein einfacher Stablenker mit jeweils einem endseitigen Gelenk ist. Die Brems- und Antriebskräfte werden allein über den unteren Querlenker in den Fahrzeugaufbau — ggf. auch in einen eigenen Fahrschemel oder ähnliches — eingeleitet. Zur Verminderung der elastokinematischen Auswirkungen von Brems- und Antriebskräften werden kleine Lenkerrollradien und Störkrafthebelarme, also auch kleine Spreizungswinkel, angestrebt. Hierbei wurde aber auch die sogenannte « Gewichtsrückstellung » der gelenkten Räder aus der eingeschlagenen Stellung in die Geradeausstellung ebenfalls sehr klein, die aber wiederum mit der in der älteren Patentanmeldung beschriebenen Stützstrebe befriedigend erreicht werden kann.

Um bei Radaufhängungen, insbesondere für lenkbare Räder, den Einbauraum beispielsweise für die Bremsen nicht allzu sehr einschränken zu müssen, ist es ferner bekannt (DE-C-19 38 850), durch Aufteilung eines Querlenkers in zwei Einzellenker eine ideelle Lenkachse zu realisieren.

Aufgabe der vorliegenden Patentanmeldung ist es, eine Radaufhängung der vorausgesetzten Gattung zu schaffen, die eine einwandfreie Auslegung der Elastokinematik für die Belastungsfälle Bremsung, Antrieb und Seitenkraft erlaubt, die ferner bei kleinem Lenkrollradius und kleinem Störkrafthebelarm eine kleine Spreizung hat und einen ausreichenden Einbauraum für die Bremse bietet, wobei ferner trotz der kleinen Spreizung eine ausreichende Gewichtsrückstellung gewährleistet sein soll.

Diese Aufgabe wird erfindungsgemäß bei einer Radaufhängung der vorausgesetzten Bauart dadurch gelöst, daß die Zugstange über ihre Gelenkverbindung mit dem Zwischenstück hinaus verlängert ist und an dieser Verlängerung ein Ende einer in Draufsicht schräg zur Fahrzeuglängsachse verlaufenden Strebe angelenkt ist, die mit ihrem anderen Ende gelenkig mit dem Fahrzeugaufbau verbunden ist. Die Zugstange bewirkt einerseits in der aus der Patentanmeldung DE-A-33 31 282 entnehmbaren Weise eine gute Gewichtsrückstellung bei kleiner Spreizung. Andererseits wird durch die Verschwenkung der Zugstange im Verlauf eines Lenkeinschlags auch die Verlängerung der Zugstange verlagert, so daß die Baugruppe Zwischenstück/Radträger beim Einschlagen des Rades auch eine Relativbewegung in Längsrichtung der Strebe ausführt. Diese Relativbewegung in Verbindung mit der Drehbewegung des Radträgers gegenüber dem Zwischenstück führt zu einer Drehung des Rades um eine ideelle Achse, wobei die Drehachse des Rades von den realen Gelenken des Radträgers und Zwischenstücks in Richtung zur Fahrzeugaußenseite hin verlagert ist. Daher können, ähnlich wie bei dem deutschen Patent DE-C-19 38 850, in der Radschüssel trotzdem verhältnismäßig groß dimensionierte Bremsen untergebracht werden.

Beim Lenken schwenkt das Rad um einen Drehpol und nähert sich mit der Reifenkontur deutlich weniger der schräg verlaufenden Strebe. Die Strebe kann, zusammen mit dem unteren Querlenker, Brems- und Antriebskräfte auf einer sehr großen Lagerbasis in den Fahrzeugaufbau oder dergleichen einleiten. Diese Kräfte werden dabei überwiegend über die Strebe in den Fahrzeugaufbau eingeleitet, die dort vorzugsweise elastisch nachgiebig gelagert ist. Eine solche Lagerung ermöglicht einerseits eine gute « Längsfederung » der gesamten Radaufhängung, wobei wegen des großen Lagerabstandes trotzdem beim Längsfedern die Radführungsgeometrie wenig beeinflußt wird.

Bei einem besonders bevorzugten Ausführungsbeispiel ist ferner eine Stützstange vorgesehen, die einerseits mit dem oberen Querlenker zwischen dessen beidendigen Anlenkungen und andererseits mit der schrägverlaufenden Strebe ebenfalls zwischen deren beidendigen Anlenkungen gelenkig verbunden ist. Dabei kann ferner zweckmäßig der untere Querlenker ein einfacher quergerichteter Lenker sein, der mit dem Fahrzeugaufbau oder dergleichen (z. B. einem Fahrschemel) nur durch ein einziges Gelenk verbunden ist. Hierbei kann der untere Querlenker natürlich nicht die aus Bremsung und Antrieb resultierenden Drehmomente aufnehmen und in den Fahrzeugaufbau einleiten. Diese Momente werden dann durch die schräg verlaufende Strebe, die Stützstange und den oberen Querlenker in den Fahrzeugaufbau eingeleitet. Ist dabei beispielsweise bei einem angetriebenen, lenkbaren Vorderrad die schräg verlaufende Strebe vom Rad schräg nach hinten innen gerichtet, so kann die Strebe in einer verhältnismäßig steifen Zone der Karosserie (unter der Motorraum-Rückwand) angelenkt werden. Die Längskräfte und die aus den Antriebsmomenten und Bremsmomenten resultierenden Vertikalkräfte, die am hinteren Gelenkende der Strebe auftreten, werden daher von einem besonders stabilen Bereich der Karosserie aufgenommen.

Die Erfindung sowie weitere vorteilhafte Einzelheiten der Erfindung sind im folgenden anhand mehrerer Ausführungsbeispiele in der Zeichnung näher erläutert. Es zeigen

Fig. 1 die perspektivische Ansicht eines ersten Ausführungsbeispiels der neuen Radaufhängung ;

Fig. 2 eine entsprechende Ansicht des unteren Querlenkers einer modifizierten Ausführungsform ;

Fig. 3 einen vertikalen Schnitt durch das Zwischenstück der neuen Radaufhängung, etwa in Fahrzeugquerrichtung, und

Fig. 4 eine teils schematisierte Draufsicht auf das Ausführungsbeispiel nach Fig. 1.

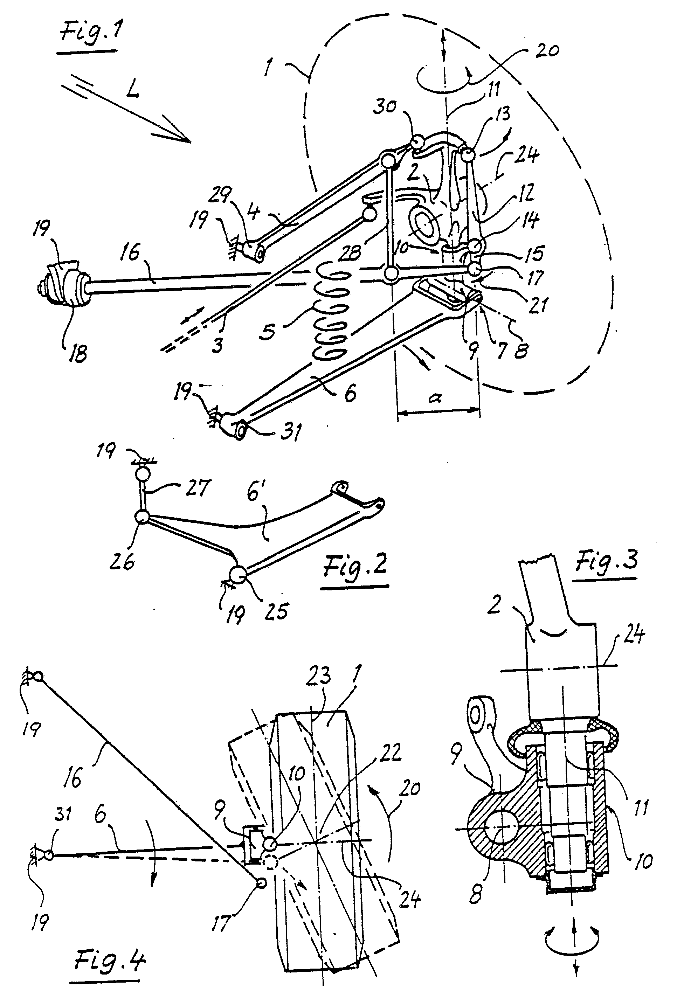

Bei den in der Zeichnung dargestellten Ausführungsbeispielen handelt es sich um Radaufhängungen lenkbarer vorderer Räder 1 eines Kraftfahrzeugs. Die Erfindung wäre jedoch auch für Kraftfahrzeuge mit lenkbaren Hinterrädern nutzbar. In Fig. 1 ist ein das Rad 1 lagernder Radträger 2 dargestellt, mit dem eine Spurstange 3 und ein oberer Querlenker 4 gelenkig verbunden sind. Der untere, die Tragfeder 5 abstützende Querlenker 6 ist in der durch die Patentanmeldung P 33 31 282 schon beschriebenen Weise über ein ecksteifes Drehgelenk 7 mit im wesentlichen längs verlaufender Drehachse 8 mit einem Zwischenstück 9 verbunden. In dem Zwischenstück 9 ist seinerseits der Radträger 2 über ein weiteres ecksteifes Drehlager 10 mit einer zumindest annä- hernd vertikalen Achse 11 und vertikaler Verschie- bemöglichkeit gelagert. Die vertikale Verschiebe- möglichkeit wird bei dem dargestellten Ausführungsbeispiel gemäß Fig. 3 durch die Verwendung von zwei Nadellagern gewährleistet. Der Radträger 2 und das Zwischenstück 9 sind schließlich noch mit einer annähernd vertikalen Zugstange 12 gelenkig verbunden. Die Zugstange 12 bewirkt beim Verdrehen des Radträgers um die Achse 11, also beim Lenkeinschlag des Rades 1, ein « Hochziehen » des Zwischenstücks 9 und damit des unteren Querlenkers 6. Über die Tragfeder 5 wird dadurch auch der Vorderwagen des Kraftfahrzeugs angehoben. Dies ist der Grund für die gute Gewichtsrückstellung der Radaufhängung, die ein selbsttätiges Zurückschwenken des eingeschlagenen Rades (nach Loslassen des Lenkrades) in die Geradeausstellung bewirkt.

Die Zugstange 12 ist an ihrem oberen Ende über das Gelenk 13 mit dem Radträger 2 und in ihrem unteren Bereich über das Gelenk 14 mit dem Zwischenstück 9 verbunden. Bei den Gelenken handelt es sich zweckmäßig um Kugelgelenke.

Wie man in Fig. 1 erkennt, ist die Zugstange 12 über ihre Gelenkverbindung (Gelenk 14) mit dem Zwischenstück 9 hinaus (nach unten) verlängert und an der so gebildeten Verlängerung 15 ist ein Ende einer in Draufsicht schräg zur Fahrzeuglängsrichtung L verlaufende Strebe 16 angelenkt (Gelenk 17), die mit ihrem anderen Ende gelenkig — durch das Gelenk 18 — mit dem (lediglich angedeuteten) Fahrzeugaufbau 19 verbunden ist.

Die in den Zeichnungen angegebenen Verbindungen mit dem Fahrzeugaufbau 19 könnten ganz oder teilweise auch Verbindungen sein, die an einem Zwischenträger oder Fahrschemel oder dergleichen ausgebildet sind, der seinerseits mit dem Fahrzeugaufbau verbunden ist.

Beim Verschwenken des Rades 1 und des Radträgers 2 im Sinne des Pfeiles 20 (Fig. 1 und Fig. 4) bewegt sich das obere Gelenk 13 der Zugstange 12 nach außen und das untere Gelenk 17 relativ zum Zwischenstück 9 nach innen, wie es der Bewegungspfeil 21 veranschaulicht. Da sich die Verlängerung 15 der Zugstange 12 mit ihrem Gelenk 17 aber an der schrägen Strebe 16 abstützt, wird das Drehlager 10 aus der in Fig. 4 ausgezogenen Lage in die strichliert eingezeichnete Lage verschoben, was natürlich auch zu einer geringfügigen Horizontalverschwenkung des Lenkers 6 um den aufbauseitigen Anlenkpunkt führt. Die eben beschriebene Horizontalverlagerung des Drehlagers 10 in Verbindung mit der Verschwenkung des Radträgers 2 um das Drehlager 10 führt bei der aus Fig. 4 schematisch dargestellten Lenkeranordnung zu einer Drehung des Rades um den Momentanpol 22. Das Rad dreht daher um einen ideellen Pol, der wesentlich mehr der Radmittenebene 23 angenähert ist, als die realen Drehgelenke und Gelenke im Bereich des Radträgers. Dies schafft den nötigen Einbauraum in der Radschüssel für großzügiger dimensionierte Bremsen. Ferner ist der insbesondere bei angetriebenen lenkbaren Rädern erwünschte kleine Störkrafthebelarm und ein kleiner Lenkrollradius bei weiterhin kleiner Speizung möglich. Die aus dem Bremsen und Antreiben resultierenden Momente werden im wesentlichen durch den unteren Querlenker 6 und die Strebe 16 in den Fahrzeugaufbau 19 eingeleitet, also auf großer Lagerbasis. Die Elastokinematik hängt dabei weitgehend von einem einzigen Gelenk, nämlich dem Gelenk 18 ab und ist gut beherrschbar, auch für den Erhalt einer guten Längsfederung der gesamten Radaufhängung.

Hierzu ist die Strebe 16 am Fahrzeugzeugaufbau 19 elastisch nachgiebig gelagert, was durch richtige Dimensionierung und Ausrichtung des Gummimaterials des Gelenks 18 erfolgen kann.

Nach den Fig. 1 und 4 verläuft die Strebe 16 bei dem dargestellten angetriebenen und lenkbaren vorderen Rad 1 schräg nach hinten innen. Diese Anordnung, in Verbindung mit der bereits beschriebenen Drehung des Rades um den Momentanpol 22 gestattet relativ große Einschlagwinkel des Rades 1 (Fig. 4), ohne daß eine zu große Annäherung der Reifenkontur an die Strebe zu befürchten ist. Die Strebe 16 weicht gewissermaßen dem eingeschlagenen Rad 1 aus. Diese Kinematik kann durch geeignete Wahl der Hebelarme der Zugstange 12 nahezu beliebig ausgelegt werden.

Wie man in Fig. 1 erkennt, greift die Strebe 16 an einer in Fahrtrichtung L vor der Radachse 24

gelegenen verlängerten Zugstange 12 an.

Gemäß der Detaildarstellung nach Fig. 2 kann für die neue Radaufhängung auch ein verwindungssteifer unterer Querlenker 6' vorgesehen sein, der auf breiter Basis zwei aufbauseitige Anlenkungen 25 und 26 hat. Ein solcher unterer Querlenker 6' kann die aus dem Antreiben oder Abbremsen des Rades 1 resultierenden Momente im wesentlichen allein aufnehmen und übertragen. Es muß allerdings eine der beiden aufbauseitigen Anlenkungen — beim dargestellten Ausführungsbeispiel nach Fig. 2 die hintere Anlenkung 26 — in Fahrzeugquerrichtung nachgiebig sein, damit die weiter oben schon beschriebene geringfügige Horizontalverschwenkung des unteren Querlenkers 6' um die andere aufbauseitige Anlenkung 25 möglich ist. Diese quer nachgiebige Lagerung kann durch eine Pendelstütze 27 gebildet sein, die zumindest annähernd lotrecht verläuft und einerseits mit dem Fahrzeugaufbau 19 und andererseits mit dem unteren Querlenker 6' gelenkig verbunden ist.

Bei dem bevorzugten Ausführungsbeispiel nach Fig. 1 ist eine in etwa vertikale Stützstange 28 vorgesehen, die einerseits mit dem oberen Querlenker 4 zwischen dessen beidseitigen Anlenkungen 29 und 30 und andererseits mit der Strebe 16 zwischen deren beidseitigen Anlenkungen (Gelenke 17 und 18) gelenkig verbunden ist. Aufgrund des — in Draufsicht — relativ großen Abstandes des Gelenks 17 der Strebe 16 von der Radachse 24 (Fig. 4) ist es mit der schon erwähnten Stützstange 28 möglich, auf die Drehmomentübertragung (Antriebs- und Bremsmomente) durch den unteren Querlenker 6' zu verzichten und diese Momente im wesentlichen auf der relativ breiten Basis a (Fig. 1) auf die Strebe 16 zu übertragen. Hierdurch ergeben sich die schon eingangs erwähnten Vorteile, daß die aus der Momentenübertragung resultierenden Vertikalkräfte in eine steife Zone der Karosserie eingeleitet werden können. Dabei kann dann ferner ein einfacherer lediglich in Querrichtung angeordneter unterer Querlenker 6 Verwendung finden, der durch ein einziges Gelenk 31 mit dem Fahrzeugaufbau 19 oder dergleichen verbunden ist. Durch richtige Wahl der Hebelarmverhältnisse (Basis a, Abstand Stützstangengelenk zu Gelenk 30 des oberen Querlenkers 4) kann unter Berücksichtigung der durch die ältere Patentanmeldung P 33 31 247 gegebenen Lehre bei der Radaufhängung nach der vorliegenden Erfindung ein Brems- und Anfahrnickausgleich erzielt werden.

## Patentansprüche

1. Radaufhängung für lenkbare Räder, insbesondere Vorderräder, von Kraftfahrzeugen, mit einem das Rad lagernden Radträger (2), mit dem eine Spurstange (3) sowie ein oberer Querlenker (4) gelenkig verbunden sind, wobei der untere die Tragfeder (5) abstützende Querlenker (6) über ein ecksteifes Drehgelenk mit im wesentlichen längs verlaufender Drehachse (8) mit einem Zwischenstück (9) verbunden ist, an dem seinerseits der Radträger über ein ecksteifes Drehlager (10) mit annähernd vertikaler Achse (11) und vertikaler Verschiebemöglichkeit gelagert ist, wobei ferner der Radträger und das Zwischenstück gelenkig mit einer annähernd vertikalen Zugstange (12) verbunden sind, wobei die Zugstange (12) über ihre Gelenkverbindung (Gelenk 14) mit dem Zwischenstück (9) hinaus verlängert ist und an dieser Verlängerung (15) ein Ende einer in Draufsicht schräg zur Fahrzeuglängsrichtung (L) verlaufenden Strebe (16) angelenkt ist, die mit ihrem anderen Ende gelenkig mit dem Fahrzeugaufbau (19) verbunden ist.

2. Radaufhängung nach Anspruch 1, dadurch gekennzeichnet, daß die Strebe (16) am Fahrzeugaufbau (19) elastisch gelagert ist.

Bei den dargestellten Ausführungsbeispielen ist gewährleistet, daß sich für die Belastungsfälle Bremsen bzw. Antreiben nahezu identische Kräfteverhältnisse an den fahrgestellseitigen Anlenkpunkten (Gelenk 18 und 31 ; Anlenkung 25 und 26) ergeben, wodurch auch die Verformungen und Verformungsrichtungen der elastischen Lagerungen für diese Anlenkungen jeweils ähnlich ausfallen und eine für beide Belastungsfälle einwandfreie elastokinematische Auslegung möglich wird.

Aus Fig. 1 geht schließlich noch hervor, daß die Anlenkung 30 des oberen Querlenkers 4 am Radträger 2 sich nicht auf der verlängerten Achse 11 des Drehlagers 11 befinden muß. Dadurch können zusätzliche Effekte, wie Sturzänderung und Änderung der Nachlaufstrecke über dem Lenkeinschlag, günstig beeinflußt werden.

3. Radaufhängung nach Anspruch 1, dadurch gekennzeichnet, daß die Strebe (16) von der Verlängerung (15) schräg nach hinten innen verläuft.

4. Radaufhängung nach Anspruch 3, dadurch gekennzeichnet, daß die Strebe (16) an einer in Fahrtrichtung (L) vor der Radachse (24) gelegenen verlängerten Zugstange (12) angreift.

5. Radaufhängung nach Anspruch 1 mit einem verwindungssteifen unteren Querlenker (6'), der auf breiter Basis zwei aufbauseitige Anlenkungen (25, 26) hat, dadurch gekennzeichnet, daß eine der beiden Anlenkungen in Fahrzeugquerrichtung nachgiebig ist.

6. Radaufhängung nach Anspruch 5, dadurch gekennzeichnet, daß die quer nachgiebige Lagerung durch eine Pendelstütze (27) gebildet ist, die einerseits mit dem Fahrzeugaufbau (19) andererseits mit dem unteren Querlenker (6') gelenkig verbunden ist.

7. Radaufhängung nach Anspruch 1, gekennzeichnet durch eine Stützstange (28), die einerseits mit dem oberen Querlenker (4) zwischen dessen beidendigen Anlenkungen (29, 30) und andererseits mit der Strebe (16) zwischen deren beidendigen Anlenkungen (Gelenke 17, 18) gelenkig verbunden ist.

8. Radaufhängung nach Anspruch 7, dadurch gekennzeichnet, daß der unter Querlenker (6) durch ein einziges Gelenk (31) mit dem Fahrzeugaufbau (19) oder dergleichen verbunden ist.

## Claims

1. A wheel suspension for steerable wheels, especially the front wheels, of motor vehicles, comprising a wheel support (2) supporting the wheel and with which support a tie bar (3) and an upper transverse guide (4) are articulatedly connected, wherein the lower transverse guide (6), supporting the suspension spring (5), is connected via an angularly-stiff swivel joint with a swivel axis (8) running substantially lengthwise to an intermediate member (9) on which, in turn, the wheel support is mounted via an angularly-stiff swivel bearing (10) with an approximately-vertical axis (11) and with the possibility of vertical displacement, in which, in addition, the wheel support and the intermediate member are articulatedly connected to an approximately-vertical draw rod (12), in which the draw rod (12) is extended beyond its joint connection (joint 14) with the intermediate member (9) and, on this extension (15), one end of a strut (16) is articulated, which strut extends in plan view obliquely to the longitudinal direction of the vehicle (L) and has its other end articulatedly connected to the body of the vehicle (19).

2. A wheel suspension according to claim 1, characterised in that the strut (16) is elastically mounted on the vehicle body (19).

3. A wheel suspension according to claim 1, characterised in that the strut (16) runs obliquely inwards to the rear from the extension (15).

4. A wheel suspension according to claim 3, characterised in that the strut (16) engages on an extended draw rod (12) which is situated in the direction of travel (L) in front of the wheel axle (24).

5. A wheel suspension according to claim 1 with a torsionally-stiff lower transverse guide (6') which, on the body side, has two articulations (25, 26) on a broad base, characterised in that one of the two articulations is able to yield in the transverse direction of the vehicle.

6. A wheel suspension according to claim 5, characterised in that the transversely-yielding mounting is formed by a link support (27) which is articulatedly connected on the one hand with a body of the vehicle (19) and on the other hand with the lower transverse guide (6').

7. A wheel suspension according to claim 1, characterised by a support rod (28) which is articulatedly connected on the one hand with the upper transverse guide (4) between its articulations (29, 30) at both ends and, on the other hand, with the strut (16) between its articulations at both ends (joints 17, 18).

8. A wheel suspension according to claim 7, characterised in that the lower transverse guide (6) is connected by a single joint (31) with the body of the vehicle (19) or the like.

## Revendications

1. Suspension de roues directrices de véhicules, en particulier de roues avant, avec un palier porte-roue (2) supportant la roue, auquel est reliée de manière articulée une tige de direction (3), ainsi qu'un bras oscillant transversal (4) supérieur, le bras oscillant transversal (6) inférieur supportant le ressort de suspension (5) étant à cette occasion relié par une articulation pivotante rigide angulairement avec un axe de rotation (8) se développant principalement longitudinalement, avec une pièce intermédiaire (9), à laquelle est supporté de son côté le palier porte-roue, par un palier tournant (10) avec un axe (11) approximativement vertical et une possibilité de translation verticale, le palier porte-roue et la pièce intermédiaire étant en outre reliés de manière articulée à une tige de traction (12) approximativement verticale, la tige de traction (12) étant à cette occasion prolongée par sa liaison articulée (Articulation 14) avec la pièce intermédiaire (9) et une extrémité d'une jambe de force (16) se développant en biais par rapport à la direction longitudinale du véhicule (L), en vue de dessus, étant articulée à ce prolongement (15) et qui est reliée de manière articulée au châssis de véhicule (19), avec son autre extrémité.

2. Suspension de roue selon la revendication 1, caractérisée en ce que la jambe de force (16) est supportée de manière élastique sur le châssis du véhicule (19).

3. Suspension de roue selon la revendication 1, caractérisée en ce que la jambe de force (19) se développe en biais intérieurement vers l'arrière, depuis le prolongement (15).

4. Suspension de roue selon la revendication 3, caractérisée en ce que la jambe de force (16) agit sur une tige de traction (12) prolongée, qui est située devant l'axe de roue (24), dans la direction de roulement (L).

5. Suspension de roue selon la revendication 1, avec un bras oscillant transversal (6') inférieur qui possède deux articulations (25, 26) disposées sur une large base, côté châssis, caractérisée en ce que l'une des deux articulations est déformable dans le sens transversal du véhicule.

6. Suspension de roue selon la revendication 5, caractérisée en ce que le supportage déformable transversalement est formé par un support oscillant (27), qui est relié de manière articulée, d'un côté au châssis de véhicule (19) et de l'autre côté au bras oscillant transversal (6') inférieur.

7. Suspension de roue selon la revendication 1, caractérisée par une tige d'appui (28), qui est reliée de manière articulée, d'un côté au bras oscillant transversal (4) supérieur, entre ses deux articulations (29, 30) et de l'autre côté à la jambe de force (16) entre les articulations (Articulations 17, 18) de ses deux côtés.

8. Suspension de roue selon la revendication 7, caractérisée en ce que le bras oscillant transversal (6) inférieur est relié par une seule articulation (31) au châssis de véhicule (19) ou similaire.

0 193 796

Fig.1

Fig.2

Fig.3

Fig.4